# EUROPÄISCHE PATENTSCHRIFT

(11) **EP 0 834 619 B1**
(45) Veröffentlichungstag und Bekanntmachung des Hinweises auf die Patenterteilung: **02.04.2003**
(21) Anmeldenummer: 97114981.0
(22) Anmeldetag: 29.08.1997
(51) Int. Cl.: E01C 3/06, E01C 9/00

(54) **Tankstelle**
Filling station
Station d'essence

(30) Priorität: 01.10.1996 DE 29617104 U
(43) Veröffentlichungstag der Anmeldung: 08.04.1998
(73) Patentinhaber: Hoffmann, Thomas Max, Dr., 45131 Essen (DE)
(72) Erfinder: Gutting, Horst Michael Ulrich, 68782 Brühl (DE); Hoffmann, Thomas Max, Dr., 45131 Essen (DE)
(74) Vertreter: Selting, Günther, Dipl.-Ing.

(56) Entgegenhaltungen:
- DE-A- 4 324 729
- DE-U- 9 206 940
- DE-U- 9 421 710

## Beschreibung

Die Erfindung betrifft eine Tankstelle mit einer Fahrbahn und flüssigkeitsdichter Bodenversiegelung.

An Abfüllvorrichtungen für Kraftstoffe werden wasserrechtliche Anforderungen gestellt, um das von diesen Stoffen ausgehende Gefährdungspotential für das Grundwasser einzuschränken bzw. auszuschließen. Diese Vorschriften sehen vor, daß alle Betankungsanlagen in ihrem definierten Wirkbereich beim Betanken der Fahrzeuge so ausgerüstet sind, daß die befestigten Bodenflächen der Abfüllplätze dauerhaft flüssigkeitsundurchlässig sowie öl- und benzinbeständig sind und den zu erwartenden mechanischen und dynamischen Belastungen durch Fahrzeuge standhalten.

Der Zwang zum Umbau und zur Renovierung bestehender Abfüllanlagen zwingt die Betreiber von Tankstellen zu erheblichen Baumaßnahmen. Diese entstehen hauptsächlich dadurch, daß ein Abfüllplatz mindestens im gesetzlich definierten Wirkbereich für grundwassergefährdende Flüssigkeiten mit einer neuen, dauerhaft flüssigkeitsundurchlässigen sowie öl- und benzinbeständigen Fahrbahn ausgerüstet werden muss. Ein Problem besteht darin, dass die Fahrbahn sehr hohen elastisch-dynamischen Kräften standhalten und dabei dauerhaft flüssigkeitsdicht sein muss. Die genannten Eigenschaften lassen sich nur mit einer sehr aufwendigen Fahrbahnkonstruktion erfüllen. Aufgrund der erforderlichen Investitionen ist damit zu rechnen, dass kleinere Tankstellen und Betriebstankstellen von Spediteuren u.dgl. ihren Betrieb aufgeben müssen, so dass die Gefahr besteht, dass die Marktkonzentration in diesem Bereich noch verstärkt wird und die Marktvielfalt reduziert wird.

Aus DE 94 21 710 U1 ist eine Tankstelle bekannt, von der der Oberbegriff des Patentanspruchs 1 ausgeht. Die Fahrbahn ist flüssigkeitsdicht ausgebildet und auf einem aus Beton bestehenden Unterbau montiert. Die Fahrbahn besteht beispielsweise aus mehreren abdichtend miteinander verbundenen Platten. Sie übernimmt die Last der Fahrzeuge und zugleich die Aufgabe der Flüssigkeitsabdichtung.

Der Erfindung liegt die Aufgabe zugrunde, eine Tankstelle zu schaffen, die mit relativ geringem Aufwand den gesetzlichen Anforderungen an den Umweltschutz, insbesondere den Grundwasserschutz gerecht wird.

Die Lösung dieser Aufgabe erfolgt erfindungsgemäß mit den im Patentanspruch 1 angegebenen Merkmalen.

Bei der erfindungsgemäßen Tankstelle sind die Funktionen der Tragfähigkeit und der Bodenversiegelung voneinander getrennt, indem mit vertikalem Abstand über einer Versiegelungsschicht eine Fahrbahnbrücke angeordnet ist. Die Fahrbahnbrücke übernimmt die Last der Fahrzeuge und überträgt diese auf den Boden bzw. auf entsprechende Fundamente, ohne die Versiegelungsschicht mechanisch zu belasten. Die sich unter der Fahrbahnbrücke erstreckende Versiegelungsschicht ist damit von dynamischen Belastungen befreit, so dass sie relativ einfach und kostengünstig hergestellt werden kann. Als Fahrbahnbrücke eignet sich beispielsweise eine Stahlkonstruktion, die nur einen relativ geringen Bodenabstand haben muß. Die darunter angeordnete Versiegelungsschicht, die von Fahrzeugbelastungen freigehalten wird, kann aus einer Kunststoffolie, einer flüssigkeitsdichten Betonschicht, einer Asphaltschicht, aus Metallblech o.dgl. bestehen. Da die Fahrzeugbelastungen nicht auf die Versiegelungsschicht übertragen werden, besteht nicht die Gefahr der Rißbildung in dieser Schicht, so daß die Anforderungen an Flüssigkeitsdichtigkeit und Dauerhaftigkeit mit geringem Aufwand erfüllt werden können.

Die Erfindung erlaubt insbesondere auch eine Umrüstung bereits bestehender Tankstellen mit sehr einfachen Mitteln. Die Fahrbahnen solcher Tankstellen, die bisher z.B. aus Verbundpflastersteinen bestanden oder mit einer relativ dünnen Beton- oder Asphaltschicht versehen waren, die den obengenannten Anforderungen nicht genügen, werden überbrückt und mit einer zusätzlichen absolut dichten Beschichtung versehen, die aus unterschiedlichen Materialien hergestellt sein kann.

Die Fahrbahnbrücke durchläßt Flüssigkeit, damit diese kontrolliert auf der Versiegelungsschicht zu einem Ablauf geführt werden kann. Auf diese Weise werden Tropfverluste beim Abfüllvorgang, kleine Leckverluste aus fehlerhaften Abdichtungen und große Verluste aus Unfällen sowie alle natürlichen Niederschläge schnell und äußerst wirksam dem Ablauf zugeführt, der mit einem Leichtflüssigkeitsabscheider verbunden ist.

Die Versiegelungsschicht ist zweckmäßigerweise an ihren Rändern durch eine flüssigkeitsdichte Randeinfassung und/oder durch Ablaufrinnen begrenzt. Auf diese Weise wird vermieden, daß Leichtflüssigkeiten über den Bereich der Versiegelungsschicht hinaus fließen. Die Versiegelungsschicht kann über den definierten Wirkbereich hinausgehen, muß aber in jedem Fall den Wirkbereich vollständig erfassen.

Zweckmäßigerweise überbrückt die Fahrbahnbrücke den Wirkbereich, so daß im Wirkbereich keine Fahrzeugbelastung auf den Boden übertragen wird. Dies ist jedoch nicht unbedingt erforderlich. Die Fahrbahnbrücke kann auch im Wirkbereich eine örtlich begrenzte Bodenunterstützung, z.B. in Form eines Fundamentes, aufweisen, wobei die Versiegelungsschicht an diese Bodenunterstützung herangeführt und an ihr hochgezogen ist. Wichtig ist in jedem Fall die Trennung der Funktionen Belastung und Bodenabdichtung. Diese Trennung wird auch dann beibehalten, wenn die Versiegelungsschicht als Wanne ausgebildet ist.

Im folgenden wird unter Bezugnahme auf die Zeichnungen ein Ausführungsbeispiel der Erfindung näher erläutert.

Es zeigen:
- Fig. 1: eine schematische Draufsicht auf eine Tankstelle,
- Fig. 2: einen Längsschnitt entlang der Linie II-II von Fig. 1, und
- Fig. 3: einen Querschnitt entlang der Linie III-III von Fig. 1.

Bei der dargestellten Tankstelle ist die Zapfsäule mit 10 bezeichnet. Im Halbkreis um die Zapfsäule 10 erstreckt sich der Wirkbereich 11, der beispielsweise von der Länge des Zapfschlauchs abhängt und denjenigen Bereich umschreibt, in dem Auslaufen von Benzin oder Öl zu erwarten ist.

An der Zapfsäule 10 führt eine Fahrbahnbrücke 12 entlang, auf die die zu betankenden Fahrzeuge auffahren, um vor der Zapfsäule 10 zu halten. Die Fahrbahnbrücke 12 hat an beiden Enden Rampen 12a,12b, die den Übergang zu der externen Fahrbahn 13 herstellen. Die Fahrbahnbrücke 12 ist hier mit durchgehender Fahrbahnbreite dargestellt, jedoch kann sie auch so ausgebildet sein, daß nur zwei Träger für die rechten und linken Fahrzeugräder vorgesehen sind, während der mittlere Bereich offen ist. Die Ausführung der Fahrbahnbrücke muß auf jeden Fall so gewählt werden, daß eine Unfallgefahr beim Ein- und Aussteigen des Fahrers und/oder Beifahrers sicher vermieden wird.

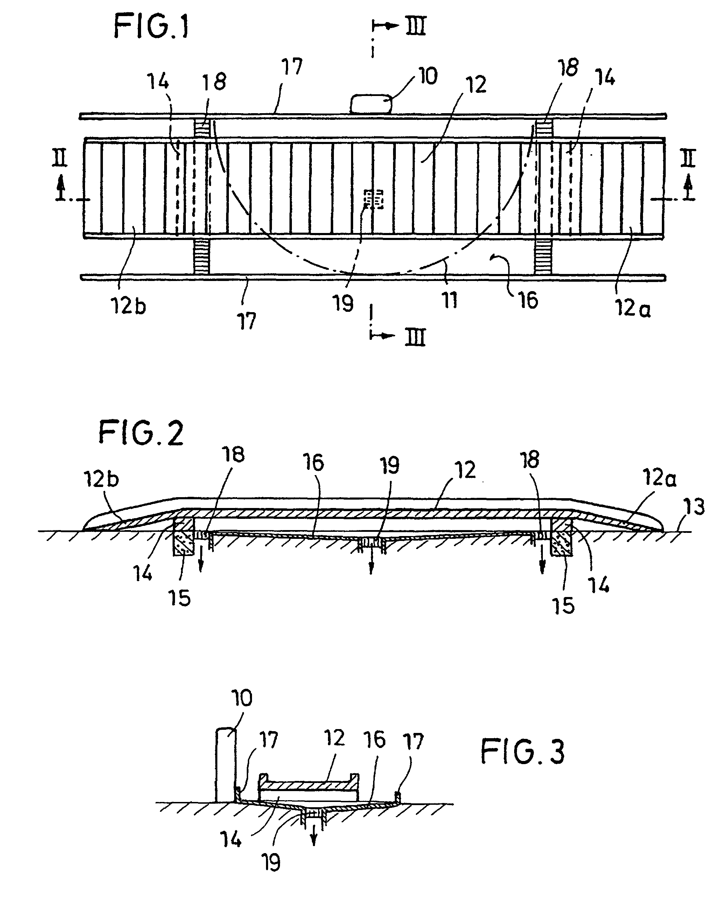

Die Fahrbahnbrücke 12 ruht mit Auflagern 14 auf Fundamenten 15, die außerhalb des Wirkbereichs 11 im Boden errichtet worden sind. Wie aus den Figuren 1 und 2 zu erkennen ist, überbrückt die Fahrbahnbrücke 12 den Wirkbereich 11, ohne daß hier eine Abstützung erfolgen würde.

Der Bodenbereich unter der Fahrzeugbrücke 4 und auch seitlich davon ist mit einer Versiegelungsschicht 16 bedeckt, bei der es sich beispielsweise um eine aus Kunststoff bestehende dicke Folie aus Stahlblech handeln kann, die gegen Öl und Benzin beständig sind. Entlang der Längsränder der Versiegelungsschicht ist jeweils eine aufragende Randeinfassung 17, z.B. in Form einer kleinen Betonwand, angeordnet, an der der Folienrand hochgezogen und abgedichtet sind. In Längsrichtung wird die Versiegelungsschicht 16 durch querlaufende Ablaufrinnen 18 begrenzt, die mit einem Bodenablaufsystem verbunden sind. Ferner befindet sich im Mittelbereich der Versiegelungsschicht 16 ein Bodenablauf 19, der ebenfalls an das Ablaufsystem angeschlossen ist. Das Bodenablaufsystem führt zu einem (nicht dargestellten) Leichtflüssigkeitsabscheider mit dem Leichtflüssigkeiten wie Öl und Benzin von Wasser abgeschieden werden.

Als Versiegelungsschicht kann auch eine vorgefertigte flüssigkeitsdichte Wanne, z.B. aus Stahl, benutzt werden, die unter der Fahrbahnbrücke befestigt ist.

Wie aus Fig. 1 zu ersehen ist, hat die Versiegelungsschicht 16 eine größere Breite als die Fahrbahnbrücke 12, so daß sie nach beiden Seiten über den Grundriß der Fahrbahnbrücke übersteht.

Die Fahrbahnbrücke 12 besteht vorzugsweise aus Stahl. Sie ist flüssigkeitsdurchlässig, so daß Flüssigkeit nicht in Längsrichtung auf die Rampen 12a,12b und von dort in den Boden gelangen kann.

Die Versiegelungsschicht 16 ist entlang ihrer Ränder flüssigkeitsdicht mit den jeweiligen Begrenzungen verbunden, insbesondere an der Grenze zu Bauwerken, wie dem Tankstellengebäude oder dem angrenzenden Domschacht eines Lagertanks. Dabei wird gemäß dem praktizierten Stand der Technik verfahren, und es wird darauf geachtet, daß eventuell einzubauende spezialisierte Dichtungssysteme über die wasserrechtliche Bauartzulassung verfügen.

Die Fahrbahnbrücke kann auch in Modulbauweise ausgeführt sein, um Transport, Aufbau und das Versetzen der Fahrbahnbrücke zu erleichtern.

## Patentansprüche

1. Tankstelle mit einer Fahrbahn, die aus einer Fahrbahnbrücke besteht und welche mit Abstand über einer Unterschicht angeordnet ist,
**dadurch gekennzeichnet,**
**dass** die Fahrbahnbrücke (12) flüssigkeitsdurchlässig ist, dass die Unterschicht eine Bodenversiegelung ist, welche aus einer flüssigkeitsdichten Versiegelungsschicht (16) besteht und dass die Fahrbahnbrücke (12) mit Auflagern (14) außerhalb der Versiegelungsschicht (16) abgestützt ist.

2. Tankstelle nach Anspruch 1, **dadurch gekennzeichnet, dass** die Fahrbahnbrücke (12) auf Fundamenten (15) ruht, die außerhalb des Wirkbereichs (11) der Zapfsäule (10) angeordnet sind.

3. Tankstelle nach Anspruch 1 oder 2, **dadurch gekennzeichnet, dass** in der Versiegelungsschicht (16) mindestens ein Bodenablauf (19) angeordnet ist, der mit einem Leichtflüssigkeitsabscheider verbunden ist.

4. Tankstelle nach einem der Ansprüche 1 bis 3, **dadurch gekennzeichnet, dass** die Versiegelungsschicht (16) sich mindestens über den Wirkbereich (11) der Zapfsäule (10) erstreckt und an ihren Rändern durch eine flüssigkeitsdichte Randeinfassung (17) und/oder durch Ablaufrinnen (18) begrenzt ist.

5. Tankstelle nach einem der Ansprüche 1 bis 4, **dadurch gekennzeichnet, dass** die Versiegelungsschicht (16) eine Kunststofffolie aufweist.

6. Tankstelle nach einem der Ansprüche 1 bis 5, **dadurch gekennzeichnet, dass** die Versiegelungsschicht (16) als Wanne ausgebildet ist.

7. Tankstelle nach Anspruch 6, **dadurch gekennzeichnet, dass** die Wanne unter der Fahrbahnbrücke (12) befestigt ist.

8. Tankstelle nach einem der Ansprüche 1 bis 7, **dadurch gekennzeichnet, dass** die Fahrbahnbrücke (12) und/oder die Versiegelungsschicht in Modulbauweise ausgeführt ist.

## Claims

1. Filling station comprising a lane consisting of a bridge lane and being arranged in spaced relationship above a lower layer,
**characterized in that**
the bridge lane (12) is liquid-permeable, the lower layer is a floor sealing consisting of a liquid-tight sealing layer (16), and the bridge lane (12) is supported by supports (14) arranged outside the sealing layer (16).

2. Filling station according to claim 1, **characterized in that** the bridge lane (12) rests on foundations (15) arranged outside the zone of action (11) of the gasoline pump (10).

3. Filling station according to claim 1 or 2, **characterized in that** the sealing layer (16) contains at least one floor drain (19) which is connected with a light liquid separator.

4. Filling station according to one of claims 1 to 3, **characterized in that** the sealing layer (16) extends at least beyond the zone of action (11) of the gasoline pump (10) and is defined at its edges by a liquid-tight border (17) and/or gutters (18).

5. Filling station according to one of claims 1 to 4, **characterized in that** the sealing layer (16) comprises a plastic film.

6. Filling station according to one of claims 1 to 5, **characterized in that** the sealing layer (16) is configured as a trough.

7. Filling station according to claim 6, **characterized in that** the trough is fastened below the bridge lane (12).

8. Filling station according to one of claims 1 to 7, **characterized in that** the bridge lane (12) and/or the sealing layer is of a modular configuration.

## Revendications

1. Station d'essence comprenant une piste de roulage qui est constituée d'un pont de piste de roulage et qui est disposée à distance au-dessus d'une couche inférieure,
**caractérisée en ce que**
le pont de piste de roulage (12) est perméable aux liquides, **en ce que** la couche inférieure est un moyen de colmatage du sol qui est constitué par une couche de colmatage imperméable aux liquides (16) et **en ce que** le pont de piste de roulage (12) est soutenu hors de la couche de colmatage (16) par des supports (14).

2. Station d'essence selon la revendication 1, **caractérisée en ce que** le pont de piste de roulage (12) repose sur des fondations (15) qui sont disposées hors de la zone d'action (11) de la pompe à essence (10).

3. Station d'essence selon la revendication 1 ou 2, **caractérisée en ce que** dans la couche de colmatage (16) est disposée au moins une évacuation au sol (19) qui est reliée à un séparateur de liquides légers.

4. Station d'essence selon l'une quelconque des revendications 1 à 3, **caractérisée en ce que** la couche de colmatage (16) s'étend au moins sur la zone d'action (11) de la pompe à essence (10) et est délimitée au niveau de ses bords par une bordure (17) imperméable aux liquides et/ou par des rigoles d'évacuation (18).

5. Station d'essence selon l'une quelconque des revendications 1 à 4, **caractérisée en ce que** la couche de colmatage (16) présente un film en matière plastique.

6. Station d'essence selon l'une quelconque des revendications 1 à 5, **caractérisée en ce que** la couche de colmatage (16) forme un bassin.

7. Station d'essence selon la revendication 6, **caractérisée en ce que** le bassin est fixé sous le pont de piste de roulage (12).

8. Station d'essence selon l'une quelconque des revendications 1 à 7, **caractérisée en ce que** le pont de piste de roulage (12) et/ou la couche de colmatage est de construction modulaire.
